# EUROPEAN PATENT APPLICATION

(11) **EP 4 459 151 A1**
(43) Date of publication of application: **06.11.2024**
(21) Application number: 23170895.9
(22) Date of filing: 01.05.2023
(51) Int. Cl.: F16F 9/46

(54) **A VALVE ARRANGEMENT FOR IMPROVED HIGH FREQUENCY PERFORMANCE, A SHOCK ABSORBER COMPRISING THE SAME, AND A METHOD FOR ADJUSTING DAMPING FLUID FLOW**

(71) Applicant: DRiV Automotive Inc., Northville, MI 48168 (US)
(72) Inventor: Stjärne, Björn, 556 27 Jönköping (SE); Larsson, Fredrik, 553 23 Jönköping (SE)
(74) Representative: AWA Sweden AB

(57) **Abstract**

The present disclosure relates to a valve arrangement (1) for improved high frequency performance. The valve arrangement (1) comprises: a valve seat member (2) adapted in size and shape to define a valve seat (21) and a flow-through opening (20); a valve member (3) adapted to be displaceable relative the valve seat (21) along a displacement axis (A) during use in response to a damping fluid pressure force overcoming an opening force threshold, wherein said damping fluid pressure force is provided by damping fluid pressure acting on an inlet side of the valve member (3), said opening force threshold being at least partly adjustable by means of a force actuator (9), wherein the valve member (3) and the valve seat member (2) are adapted to provide a chamfer restriction (22, 32) provided with an opening crosssection which decreases from an inner lateral position to an outer lateral position relative the displacement axis (A). A shock absorber (1000A, 1000B) comprising said valve arrangement (1) and a method for adjusting damping fluid flow is disclosed also.

## Description

### Technical Field

The present disclosure relates to a valve arrangement adapted for improving high frequency performance. The present disclosure also relates to a shock absorber comprising the same and a method for adjusting a damping fluid flow.

### Background

Shock absorbers are designed to absorb and damp shock impulses. To provide desired damping characteristics, a shock absorber may incorporate one or more valve arrangements for regulating a damping fluid flow following a damping fluid displacement. One important aspect of valve arrangements is their ability to respond quickly to damping fluid displacements. If the valve arrangement responds too slowly, it may lead to undesired damping effects.

In the case of a shock absorber comprising a main valve arrangement and a pilot valve arrangement, undesired damping effects such as oscillations following shock impulses may be mitigated by incorporating a fixed restriction upstream from a pilot chamber inlet, which fixed restriction provides a stabilizing effect. This works well for low oscillation frequencies as well for shock absorber accelerations where the pilot flow is set by the pilot chamber inlet. However, at higher oscillation frequencies and shock absorber accelerations, the main valve arrangement must open rapidly to control the pressure. For a rapid opening of the main valve arrangement, an oil displacement through the fixed restriction is generated, in which case the pilot flow is set by the pilot inlet together with the oil displacement, resulting in a higher flow than at low frequencies. The increased flow through the fixed restriction may lead to pressure overshoots and an overdamped main valve causing the main valve to react too slowly, resulting in poor high frequency performance. The problem of pressure overshoots can also arise for other types of valve arrangements when forced to respond to high frequency oscillations and large shock absorber accelerations.

In view of the above, it is of interest to provide an improved valve arrangement for improved high frequency performance.

### Summary

It is an object of the present invention to provide an improved solution that alleviates at least some of the mentioned drawbacks with present solutions. Furthermore, a first object of the invention is to provide a valve arrangement with improved stability which also performs well during high frequency operation. This first object is solved by the invention according to claim 1. A second object of the invention is to provide a shock absorber with improved stability which also performs well during high frequency operation. This second object is solved by the shock absorber according to claim 14. A third object of the invention is to provide a method for adjusting a damping fluid flow in a valve arrangement for improving stability in a manner which is also suitable for high frequency operation. This third object is solved by the method according to claim 15. Additional advantages are achieved by the invention according to the dependent claims and embodiments discussed in the description.

According to a first aspect of the invention, a valve arrangement for regulating damping fluid flow of a shock absorber is provided. The valve arrangement comprises: a valve seat member adapted in size and shape to define a valve seat and a flow-through opening; a valve member adapted to be displaceable relative the valve seat along a displacement axis during use in response to a damping fluid pressure force overcoming an opening force threshold, wherein said damping fluid pressure force is provided by damping fluid pressure acting on an inlet side of the valve member, said opening force threshold being at least partly adjustable by means of a force actuator, wherein the valve member and the valve seat member are adapted to provide a chamfer restriction extending to the valve seat, the chamfer restriction provided with an opening cross-section which decreases from an inner lateral position to an outer lateral position relative the displacement axis, a non-zero chamfer restriction angle between a first chamfer restriction surface provided by the valve seat member and a second chamfer restriction surface provided by the valve member in a lateral direction is equal to or less than 45°.

The chamfer restriction provides a pressure drop of damping fluid pressure when damping fluid flows through the valve arrangement, thereby subjecting the valve member to a pressure differential contributing to a stabilizing pressure gradient for increasing damping fluid flows. By means of the chamfer restriction, the valve arrangement can respond rapidly to changing damping fluid flows. Thus, the valve arrangement may in addition to improving stability also perform well during high frequency performance, thereby solving the first object of the invention. The valve arrangement also advantageously reduces pressure overshoots following high shock absorber acceleration. Additionally, the chamfer restriction of the valve arrangement can furthermore replace a fixed restriction in valve arrangements and therefore avoid introducing the associated disadvantages.

The chamfer restriction is provided by a first chamfer restriction surface provided by the valve seat member and a second chamfer restriction surface provided by the valve member. The first and second chamfer restriction surfaces are oriented relative one another by said chamfer restriction angle. According to one embodiment, the chamfer restriction surface of the valve seat member, i.e., the first restriction surface, is provided by a chamfer of the valve seat member wherein said chamfer extends towards the valve seat. The chamfer is adapted with a chamfer angle. The chamfer angle may be measured as the angle formed between the first chamfer restriction surface and a plane perpendicular to said displacement axis. Alternatively, or in combination, the chamfer restriction of the valve member, i.e., the second restriction surface, is provided by a chamfer provided by the valve member. The chamfer is adapted with a chamfer angle. The chamfer angle may be measured as the angle formed between the second chamfer restriction surface and a plane perpendicular to said displacement axis. The first restriction surface and/or the second restriction surface may extend intermittently or wholly in a circumferential direction of the displacement axis. The first restriction surface and/or the second restriction surface may be respectively adapted with a curvature profile in the lateral direction so that the opening cross-section varies non-linearly in the lateral direction. The chamfer restriction is provided with an opening cross-section which increases from an inner lateral position to an outer lateral position. The chamfer restriction may be provided so that the opening cross-section decreases along the whole extension of the chamfer restriction in the lateral direction. The chamfer restriction may be provided so that the opening cross-section remains constant or increasing along one or more regions of the chamfer restriction in the lateral direction.

By lateral direction, it may be meant a radial direction of the displacement axis. It may be meant a direction at least partly oriented away from the displacement axis but with an origin offset therefrom.

The chamfer restriction angle may be measured as the angle between the first chamfer restriction surface and the second chamfer restriction surface. In the case wherein the first chamfer restriction surface is parallel to a plane perpendicular to the displacement axis, then the chamfer restriction angle may be measured as the angle between said plane perpendicular to the displacement axis and the second chamfer restriction surface. In the case wherein the second restriction surface is parallel to a plane perpendicular to the displacement axis, then the chamfer restriction angle may be measured as the angle between said plane perpendicular to the displacement axis and the first chamfer restriction surface.

The chamfer restriction angle impacts the behavior of the pressure drop along the chamfer restriction in a direction towards the valve seat. The pressure drop may be defined as the pressure differential between the lowest damping fluid pressure acting on the valve member and the highest damping fluid pressure acting on the valve member. The behavior of the pressure drop may be characterized as a pressure differential curve with respect to damping fluid flow. A smaller chamfer restriction angle may result in a steeper pressure differential curve while a larger chamfer restriction angle may result in a more flattened pressure differential curve. A steeper pressure differential curve may be desired because it improves stability for all damping fluid displacement flows. The desired impact of the non-zero chamfer restriction angle on the pressure differential curve may be provided for a chamfer restriction angle of equal to or less than 45°. The impact of the non-zero chamfer restriction angle on the pressure differential curve may be negligible for a chamfer restriction angle larger than 45°.

By opening of the valve arrangement, it may be meant that the valve member is displaced at least partially from the valve seat, either from a closed position or an initially open position, to allow a larger flow-through area through a restriction formed between the valve member and the valve seat.

Moreover, by element A being fluidly connected to an element B, it may be meant that there is a damping fluid flow path between element A and element B. The same may be meant by fluid communication.

The opening force threshold may be defined as the damping fluid pressure force required to open the valve arrangement or displace the valve member from a closed position or an initially open position allowing limited damping fluid flow. The opening force threshold may be at least partly set by the force actuator. The opening force threshold may also be impacted by spring means arranged to interact with the valve member. The valve member may be adapted with spring means for resilient displacement from a resiliently neutral position or a resiliently displaced position.

The chamfer restriction may provide a sloping portion in the flow-through opening. The chamfer restriction may be adapted so that either the first or the second chamfer restriction surface extends in a continuously and optionally smooth manner.

The valve seat member may be adapted so that the flow-through opening is provided with a circular geometry. The first chamfer restriction surface may extend partially or wholly in a peripheral direction of the flow-through opening. The first chamfer restriction surface may provide a cone surface portion. The valve seat member may be provided with a symmetrical or anti-symmetrical geometry. Alternatively, the valve seat member may be adapted so that the flow-through opening is provided with some other geometry, which may be either symmetrical or asymmetrical. The valve seat member may be adapted so that the flow-through opening leads to a damping fluid flow channel for guiding damping fluid displacements.

The flow-through opening may be substantially circular and extend along or define a longitudinal axis of the valve arrangement. The flow-through opening may be limited or bounded by the valve seat. The extension of the flow-through opening may be defined wholly or partly by the valve seat. When the valve arrangement is arranged to or in a shock absorber, or in a separate valve device adapted for arrangement to a shock absorber, the flow through-opening may fluidly connect two separate damping fluid spaces of the shock absorber. Examples of damping fluid spaces of the shock absorber may include e.g., compression fluid space, rebound fluid space, a pilot valve chamber, damping fluid reservoir or other damping fluid spaces. The valve arrangement may be advantageously arranged to regulate damping fluid flows between two or more damping fluid spaces.

The valve seat member may be provided as a single part. Alternatively, the valve seat member may be formed as two or more separate parts adapted to be assembled, wherein one separate part provides the valve seat, and one other separate part provides the first chamfer restriction surface. Upon assembly of the separate parts to form the valve seat member, the first chamfer restriction surface may extend to the valve seat.

The valve seat may be adapted in size and shape to extend along a periphery of the flow-through opening. The valve seat may extend wholly, partially, or intermittently along a periphery of the flow-through opening to provide gaps at regular or irregular intervals for enabling limited fluid flow from the flow-through opening. The valve seat provides a valve seat surface oriented towards a valve seat proximate portion of the valve member. The valve seat surface and the valve seat proximate portion may interact with one another to provide a regulating restriction for damping fluid flow. The valve seat may extend wholly or partially in a peripheral direction of the flow-through opening. The valve seat member may be adapted so that damping fluid flow is directed towards the valve seat.

The valve member is adapted to be displaceable relative the valve seat along a displacement axis. By displaceable, it may mean that the valve member moves wholly or partially relative the valve seat. For instance, the valve member may be adapted to be at least partially resiliently displaced relative the valve seat by means of spring means. The valve member may be displaceable along the displacement axis in an axial direction, which axial direction may be aligned with a longitudinal axis of the valve arrangement. The valve member may comprise a generally flat body, such as a disc shape. The valve member may comprise a substantially cylindrical body, such as a poppet body. The valve member may be adapted with a central opening for providing a limited flow therethrough, in particular when the valve member is seated to the valve seat.

The valve member may be adapted to move between a first position where the valve member closes the flow-through opening or limits a flow cross-section for damping fluid flowing through the flow-through opening to a second position where a flow cross-section for damping fluid flowing through the flow-through opening is increased. The first position and/or the second position may be equilibrium positions. The valve member may be placed in one or more equilibrium positions based on force applied by the force actuator, forces applied by spring members or the like, by the valve member itself if adapted with spring means, and the damping fluid flow. One equilibrium position may be when the valve member is seated to the valve seat, thus presenting a closed position. One other equilibrium position may be when the valve member is at least partially or wholly at a distance from the valve seat, thus presenting an open position allowing a limited initial fluid flow. The valve member may be placed in the equilibrium position by means of a force applied by the force actuator. The valve member may be placed in the equilibrium position as a consequence of no force being applied from the force actuator.

The valve member may be adapted with a shape for closing the flow-through opening. For instance, if the flow-through opening is provided with circular geometry, the valve member may be provided with a circular geometry.

When arranged in the valve arrangement, the valve member provides an inlet side and an outlet side. The inlet side of the valve member may be the side of the valve member oriented towards the flow-through opening. The outlet side of the valve member may be a side located on an opposite side of the inlet side of the valve member. The valve member may be adapted with one or more apertures enabling damping fluid flow therethrough. One such aperture or a plurality of such apertures may fluidly connect the flow-through opening with an outlet side damping fluid space. The outlet side damping fluid space may be a damping fluid space into which damping fluid flowing past the valve seat flows into. One such aperture or a plurality of such apertures may fluidly connect to a different damping fluid space, thereby bypassing the outlet side damping fluid space.

The inlet side of the valve member may provide a pressure area. The pressure area may extend at least partly across the flow-through opening. The valve member may provide on the inlet side a valve seat proximate portion. The valve arrangement may be adapted so that the valve seat proximate portion is able to directly engage with the valve seat to close the valve arrangement, partly or wholly. The valve arrangement may be adapted so that the valve seat proximate portion is located at a distance from the valve seat to enable or contribute to a limited flow through the valve arrangement. The pressure area and the valve seat proximate portion may be overlapping or non-overlapping.

When damping fluid flows through the valve arrangement, the pressure area may be divided into at least a first pressure area portion and a second pressure area portion. The first pressure area portion and the second pressure area portion may be non-overlapping. The first pressure area portion may extend at least partly across the flow-through opening. The second pressure area portion may extend between the first pressure area portion and the valve seat proximate portion. In the case of the flow-through opening having substantially circular geometry, the first pressure area may be provided on the inlet side of the valve member so that it is centrally located relative the flow-through opening. The first pressure area portion and the second pressure area portion may be concentrically provided.

The first pressure area portion may be subjected to a first damping fluid pressure. The second pressure area portion may be subjected to a second damping fluid flow pressure lower than the first damping fluid flow pressure. The chamfer restriction may be adapted so that for successively increasing damping fluid flows, a pressure differential between damping fluid pressure acting on the first pressure area portion and damping fluid pressure acting on the second pressure area may successively increase. Damping fluid pressure acting on the first pressure area portion may increase for increasing damping fluids flows. Damping fluid pressure acting on the second pressure area portion may also increase for increasing damping fluid flows but at lower rate than the damping fluid pressure acting on the first pressure area portion so that a pressure differential increases for an increased damping fluid flow. Damping fluid pressure acting on the second pressure area portion may decrease and damping fluid pressure acting on the first pressure area portion may increase for increasing damping fluid flows.

In reference to said damping fluid flow, it may refer to the damping fluid flow flowing into the valve arrangement. For a given damping fluid flow into the valve arrangement, a damping fluid flow at the chamfer restriction, i.e., a chamfer restriction damping fluid flow may remain constant. A flow velocity of the chamfer restriction damping fluid flow may increase along the chamfer restriction in a direction towards the valve seat for a constant chamfer restriction local damping fluid flow. The flow velocity at any given location along the chamfer restriction may increase for an increased damping fluid flow.

The chamfer restriction may be adapted so that for successively increasing damping fluid flows flowing past the chamfer restriction, the size of the second pressure area portion increases and the size of the first pressure area portion decreases.

The pressure differential between damping fluid pressure acting on the first pressure area portion and damping fluid pressure acting on the second pressure area portion may be measured as the difference between the highest damping fluid pressure acting on the first pressure area portion and the lowest damping fluid pressure acting on the second pressure area portion. The first pressure area portion may be associated with a substantially even pressure level following increased or decreased pressure level in response to damping fluid flow speed. The second pressure area portion may be associated with a pressure gradient. The pressure gradient associated with the second pressure area portion may be oriented so that it generally points from a valve seat proximate portion towards the first pressure area portion.

Prior to any damping fluid flows through the flow-through opening of the valve arrangement, the valve member may be in a first equilibrium position, such as a closed position. When damping fluid flows through the flow-through opening towards the valve member, damping fluid pressure increases and acts over the pressure area of the inlet side of the valve member, thereby providing a damping fluid pressure force acting on the valve member in a direction to displace it away at least partly from the valve seat. Following pressure buildup to a point where the required damping fluid pressure force to overcome said opening force threshold is provided, the valve arrangement opens at least partially or wholly.

When the valve arrangement at least partly or wholly opens, the damping fluid is enabled to flow freely along the chamfer restriction in a direction towards the valve seat. Due to the geometry of the chamfer restriction towards the valve seat, which forms a narrowing geometry, the damping fluid flowing past the chamfer restriction towards the valve seat is forced to flow at an increased damping fluid flow speed, resulting in a pressure drop along the chamfer restriction. Due to the pressure drop, the valve member is subjected to uneven pressure levels depending on position. In other words, the pressure area of the inlet side of the valve member may be viewed as dividing into the first pressure area portion and the second pressure area portion, wherein the second pressure area portion is subjected to a lower pressure than the first pressure area portion. In response to the pressure drop along the chamfer restriction, the total pressure acting on the valve member may eventually decrease, thereby leading to a reduced damping fluid pressure force acting on the valve member. This may then decelerate the valve member in its movement away from the valve seat and may lead it to also reverse movement direction to move back towards the valve seat to reach an equilibrium position where force equilibrium is found between damping fluid pressure force, actuator force, and any spring forces the valve member is subjected to, either by external spring member or by means of resilience of the valve member itself. Thus, due to the pressure drop along the chamfer restriction, a stabilizing effect on the valve member in response to fluid displacements is provided.

According to one embodiment, the chamfer restriction is adapted so that: for a first damping fluid flow, the damping fluid pressure force displacing the valve member from the valve seat acts on a first pressure area portion on the inlet side of the valve member, and for a second damping fluid flow greater than the first damping fluid flow, the first pressure area portion decreases from a first area size to a smaller second area size.

For the first damping fluid flow, the damping fluid pressure acting on the first pressure area portion may be at a first damping fluid pressure level. For the second damping fluid flow, the damping fluid pressure acting on the first pressure area portion may be at a second damping fluid pressure greater than the first damping fluid pressure level. The first pressure area portion may be a portion of a pressure area on the inlet side of the valve member. When the valve member is positioned in an open position, the pressure area may divide into said first pressure area portion and at least a second pressure area portion. The first pressure area portion and the at least second pressure area portion may be concentrically arranged. The first pressure area portion and the second pressure area portion may be non-overlapping. The first pressure area portion may decrease radially from the first area size to the second area size.

According to one embodiment, the chamfer restriction is adapted so that: for a first damping fluid flow, there is a first pressure differential between damping fluid pressure associated with a first pressure area portion of the pressure area and damping fluid pressure associated with a second pressure area portion of the pressure area different from the first pressure area portion, and for a second damping fluid flow greater than the first damping fluid flow, there is a second pressure differential between damping fluid pressure associated with the first pressure area portion and damping fluid pressure associated with the second pressure area portion, wherein the second pressure differential is greater than the first pressure differential.

When the valve member is positioned in an open position, the pressure area may divide into said first pressure area portion and at least a second pressure area portion. The first pressure area portion and the at least second pressure area portion may be concentrically arranged. The first pressure area portion and the second pressure area portion may be non-overlapping. The first pressure area portion may decrease radially from the first area size to the second area size. By this, stability may be eve further improved.

According to one embodiment, the chamfer restriction is adapted so that the transition of the first pressure area portion between the first area size and the second area size is stepless. This may be provided by the chamfer restriction being adapted to provide a continuous chamfer restriction surface extending to the valve seat. The continuous chamfer restriction surface may extend from a damping fluid channel within the flow-through opening. The continuous chamfer restriction surface may be smooth. The continuous chamfer restriction surface may be defined by a chamfer restriction width and a chamfer restriction angle. The chamfer restriction angle and the chamfer restriction width may be mutually selected to provide a desired pressure drop depending on damping fluid flow through the flow-through opening. By a stepless transition between the first area size and the second area size, high frequency performance may be improved.

According to one embodiment, the non-zero chamfer restriction angle is selected from the interval of 5°-45°, preferably from the interval of 5°-30°, and most preferably from the interval of 10°-30°. The chamfer restriction angle may be selected from the intervals 5°-10°, 10°-15°, 15°-20°, 20°-25°, 25°-30°, 30°-35°, 35°-40°, 40°-45°, or from an interval formed by any combination of these intervals. A lower chamfer restriction angle may provide a steeper pressure differential curve with respect to damping fluid flow. A higher chamfer restriction angle may provide a flatter pressure differential curve with respect to damping fluid flow. A steeper pressure differential curve is advantageous for stability. Thus, a low chamfer restriction angle may be preferred. However, a too low chamfer restriction angle may result in the necessity of having to achieve stricter manufacturing tolerances to obtain desired pressure behaviors along the chamfer restriction, which in turn may cause increased manufacturing costs. By appropriately selecting a chamfer restriction angle within one of the above chamfer restriction angle intervals, a cost-effective valve arrangement with a favorable pressure differential curve may be achieved.

According to one embodiment, the chamfer restriction comprises a first and a second chamfer restriction portion adapted with respective non-zero chamfer restriction angles equal to or less than 45° or respectively selected from the interval of 5°-45°, preferably from the interval of 5°-30°, and most preferably from the interval of 10°-30°. The respective chamfer restriction angles may be selected from the intervals 5°-10°, 10°-15°, 15°-20°, 20°-25°, 25°-30°, 30°-35°, 35°-40°, 40°-45°, or from an interval formed by any combination of these intervals. By having two separate chamfer restriction portions within said chamfer restriction, it may allow tuning of the pressure differential curve to preferred behaviors. A first chamfer restriction portion and a second chamfer restriction portion may be provided. The second chamfer restriction portion may be arranged upstream the first chamfer restriction portion. The respective chamfer restriction portions may be separated by a distance along the flow distance to the valve seat or be immediately connected. The first and second chamfer restriction angles may be different or the same. If the same, the first and second chamfer restriction portion may be separated from one another by means of an intermediate portion with a chamfer restriction angle being zero or a chamfer restriction angle different from the chamfer restriction angles of the first chamfer restriction portion and the second chamfer restriction portion. The chamfer restriction may comprise three or more chamfer restriction portions as hereby disclosed. The three or more chamfer restriction portions may be successively arranged upstreams to the valve seat.

According to one embodiment, the chamfer restriction is adapted with a curved geometry adapted with a chamfer restriction angle varying intermittently or continuously in a direction from the valve seat to the flow-through opening. By a curved geometry, the chamfer restriction may allow even more tuning of the pressure differential curve to a preferred behavior. The chamfer restriction angle may decrease monotonously in a direction towards the valve seat.

According to one embodiment, the chamfer restriction extends wholly in a circumferential direction around the flow-through opening. By this, the damping fluid pressure may act on the pressure area, and the first pressure area portion and the second pressure area portion in a circumferentially symmetrical way which may improve stability. By circumferential, it may be meant a peripheral direction and vice versa.

According to one embodiment, the valve member is a rigid valve member or a shim spring valve member.

By rigid, it may be meant that the valve member is made of a material or otherwise adapted to not provide resilient displacement by itself. A rigid valve member may for instance be a disc valve element, a poppet, or the like. By this, a more durable valve arrangement may be provided. The valve member may be caused to return to an initial nondisplaced position by means of a spring means such as a helical spring or the like when no actuator force is provided.

The valve member may be a shim spring valve member. By this, it may be meant that the valve member is made of a material or otherwise adapted to provide resilient displacement. By resilient displacement, it may be meant that the valve member will by its own resilience be caused to return to an initial position from which it was displaced from when actuator force or other forces responsible for the valve member's displacements is no longer provided. The valve member may comprise generally two or three or more valve member portions mutually resiliently displaceable relative each other. The two or three or more valve member portions may be concentrically provided and interconnected by means of one or more respective connecting portions acting as spring means. By this, the valve member may be caused to return to an initial nondisplaced position without an external spring means such as a helical spring or the like when no actuator force is provided.

According to one embodiment, the valve arrangement comprises a force actuator for adjusting the opening force threshold, wherein the force actuator is a solenoid, a spring actuator, a pressure-controlled actuator, or the like. The valve arrangement may be adapted so that the actuator force is generally applied in a direction parallel to a longitudinal axis of the valve arrangement or a flow-through opening axis of the flow-through opening. The longitudinal axis and the flow-through opening axis may be the same.

According to one embodiment, the valve arrangement comprises a spring element adapted to be arranged between the valve member and the valve seat member. By this, movement of the valve member to a nondisplaced position by means of the force actuator may be facilitated.

According to one embodiment, the valve arrangement is adapted for arrangement in a pilot valve arrangement. By arranging the valve arrangement in a pilot valve arrangement, a fixed restriction of the pilot valve arrangement may be omitted.

According to one embodiment, the valve arrangement is adapted for arrangement in a main stage valve arrangement. By main stage valve arrangement, it may be meant a valve arrangement which is designed to provide a main regulation of damping fluid flow during compression flow and/or rebound flow. The main stage valve arrangement may comprise a plurality of valve elements such as one or more disc valves, one or more shim disc valve elements, one or more check valves, one or more shim stacks, or one or more electrically controllable valves to regulate damping fluid flow in one or more flow channels defined by the main stage valve arrangement.

According to one embodiment, the valve arrangement is adapted for arrangement in a piston valve arrangement. By this, high frequency performance may be improved.

According to a second aspect of the invention, a shock absorber is provided. The shock absorber comprises the valve arrangement according to the first aspect or any embodiments thereof. By comprising said valve arrangement, the shock absorber's high frequency performance may be improved.

According to a third aspect of the invention, a method for regulating a damping fluid flow by means of a valve arrangement is provided. The method comprises steps of providing a valve arrangement comprising: a valve seat member adapted in size and shape to define a valve seat and a flow-through opening; a valve member adapted to be displaceable relative the valve seat along a displacement axis in response to a damping fluid pressure force overcoming an opening force threshold, wherein said opening force is provided by damping fluid flow pressure acting on an inlet side of the valve member, and said opening force threshold being at least partly adjustable by means of a force actuator, wherein the valve member and the valve seat member provide a chamfer restriction extending to the valve seat, the chamfer restriction provided with an opening cross-section which decreases from an inner lateral position to an outer lateral position relative the displacement axis. The method further comprises the step of adjusting the valve member such that for a first damping fluid flow, the damping fluid pressure force displacing the valve member from the valve seat acts on a first pressure area portion on the inlet side of the valve member, and for a second damping fluid flow greater than the first damping fluid flow, the first pressure area portion decreases from a first area size to a smaller second area size.

The method may incorporate one or more additional steps regarding control of the valve arrangement for adjusting a damping fluid flow based on description provided above in association with the valve arrangement according to the first aspect or any embodiments thereof, or the shock absorber according to the second aspect of the invention or any embodiments thereof.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a cross-sectional side view of a valve arrangement according to one embodiment of the invention when arranged in a valve device;
Fig. 2a shows a perspective top view of the valve seat member according to one embodiment of the invention;
Fig. 2b shows a zoomed in perspective top view of the valve seat member according to one embodiment of the invention;
Fig. 3 shows a zoomed in cross-sectional side view of a valve arrangement according to one embodiment of the invention when arranged in a valve device;
Figs. 4a-b show pressure areas of the inlet side of the valve member according to one embodiment of the invention;
Figs. 4c-d show pressure profiles of pressure areas of the inlet side of the valve member according to one embodiment of the invention;
Figs. 5a-e show cross-sectional side views of a valve arrangement according to respective embodiments of the invention;
Fig. 6a shows a cross-sectional side view of a valve arrangement according to one embodiment of the invention when arranged in a valve device;
Fig. 6b shows a zoomed in cross-sectional view of a valve arrangement according to one embodiment of the invention when arranged in a valve device;
Fig. 7a shows a side view of a shock absorber according to one embodiment of the invention;
Fig. 7b shows a side view of a shock absorber according to one embodiment of the invention;
Fig. 8a shows a graph illustrating the valve member displacement with respect to damping fluid flow according to one embodiment of the invention;
Fig. 8b shows a graph illustrating the damping fluid pressure at an inlet to the valve arrangement with respect to damping fluid flow according to one embodiment of the invention;
Fig. 9 shows impulse responses of a shock absorber according to one embodiment of the invention and a prior art solution with respect to time;
Fig. 10 shows impulse responses of a shock absorber according to one embodiment of the invention and a prior art solution with respect to position,
Fig. 11 shows a flow chart of a method according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

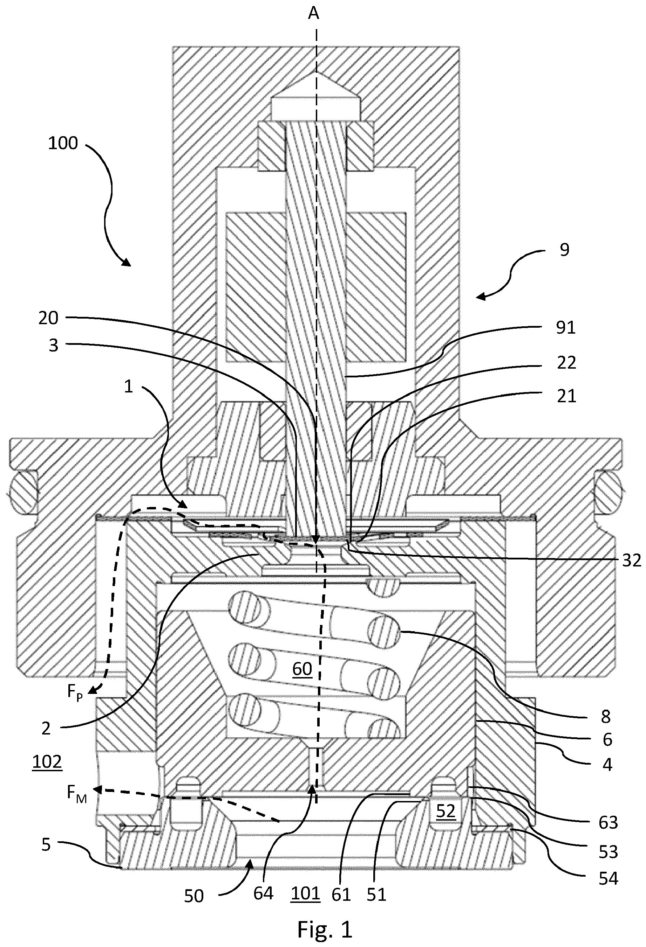

In reference to e.g., Fig. 1, the invention relates to a valve arrangement 1 for improving high frequency oscillations in a shock absorber. The valve arrangement 1 comprises a valve seat member 2 adapted in size and shape to define a valve seat 21 and a flow through opening 20. The valve arrangement 1 comprises a valve member 3 adapted to be displaceable relative the valve seat 21 along a displacement axis A during use in response to a damping fluid pressure force overcoming an opening force threshold. Said damping fluid pressure force is provided by damping fluid pressure acting on an inlet side of the valve member 3. Said opening force threshold is at least partly adjustable by means of a force actuator 9. The valve member 3 and the valve seat member 2 are adapted to provide a chamfer restriction 22, 32 extending to the valve seat 21. The chamfer restriction 22, 32 is provided with an opening cross-section which decreases from an inner lateral position to an outer lateral position relative the displacement axis A. The chamfer restriction 22, 32 is provided so that a non-zero chamfer restriction angle α between a first chamfer restriction surface 22 provided by the valve seat member 2 and a second chamfer restriction surface 32 provided by the valve member 3 in a lateral direction is equal to or less than 45°. According to one embodiment, as shown in Fig. 1, the second chamfer restriction surface 32 of the valve member is substantially parallel to a plane perpendicular to the displacement axis A, while the first chamfer restriction surface 22 of the valve seat member 2 is provided by a chamfer 22. In such an embodiment, the valve seat member 2 may be adapted with the chamfer located in the flow-through opening 20 and extending to the valve seat 21. Said chamfer is adapted with a non-zero chamfer angle α₂₁ equal to or less than 45°.

The valve arrangement 1 advantageously improves stability while also performing well during high frequency operation.

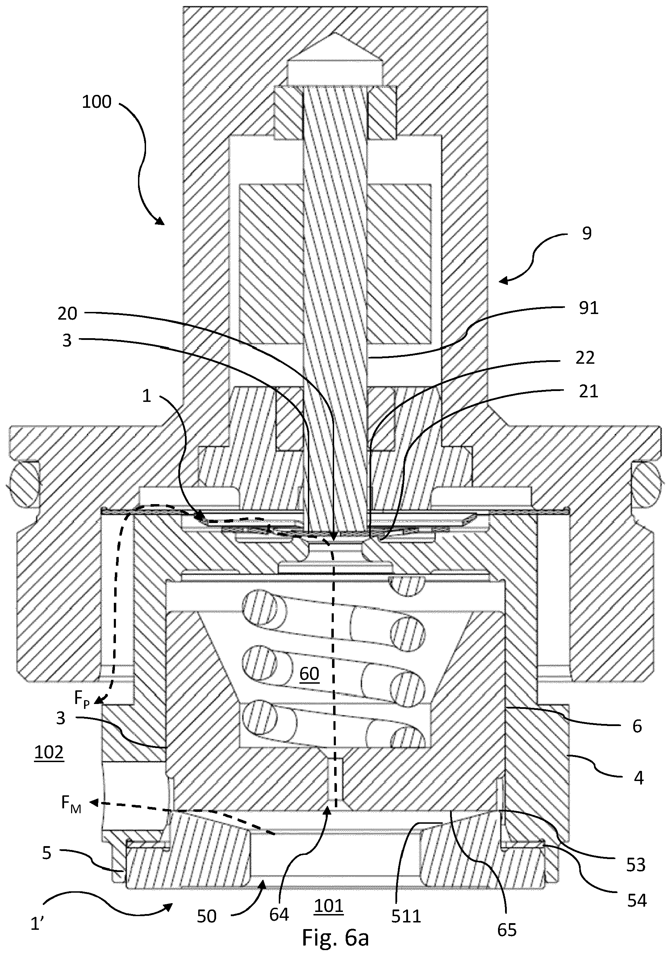

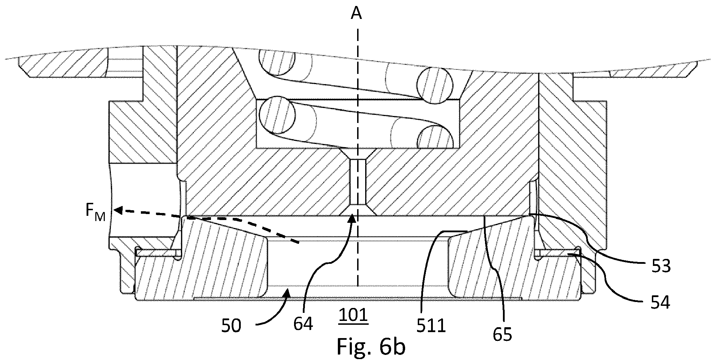

The valve arrangement 1 is not limited to being implemented as a particular type of valve arrangement. It may for instance be implemented as a pilot valve arrangement 1 as indicated in e.g., Fig. 1. It may also be implemented as a main valve of a valve device as indicated in e.g., Figs. 6a,6b. It may also be implemented as a piston valve arrangement.

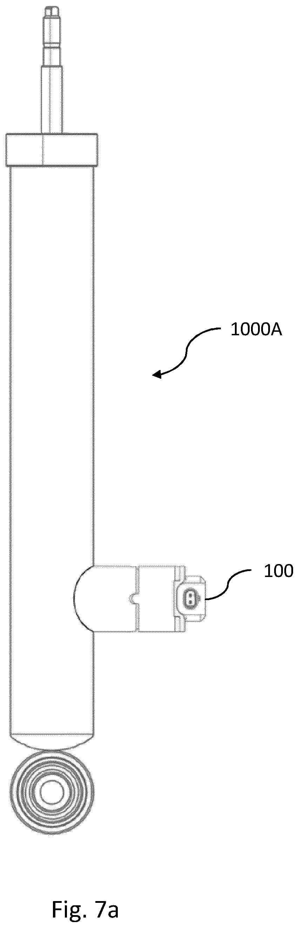

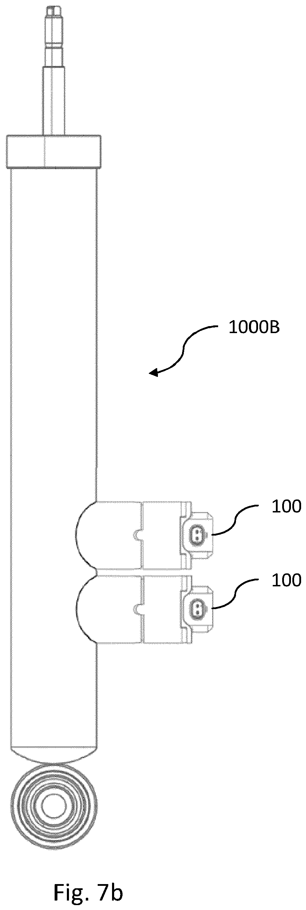

Fig. 1 shows a cross-sectional view of a valve arrangement 1 according to one embodiment when implemented in a valve device 100 as a pilot valve arrangement 1. The valve arrangement 1 is however not limited for use as a pilot valve arrangement but may be arranged to serve as other types of valve arrangements as well. The valve device 100 may be an electrically controllable valve device for regulating compression flow or rebound flow in a shock absorber 1000A, 1000B, see Figs. 7a, 7B.

As shown in Fig. 1, the valve device 100 comprises a main valve wherein a main valve member 6 is adapted to axially move relative a main valve seat member 5 to regulate a main damping fluid flow F_{M} between a first fluid flow space 101 and a second fluid flow space 102. The first fluid flow space 101 and the second fluid flow space 102 are fluidly connected to respective different fluid flow spaces of the shock absorber for managing damping flow displacements following a rebound and/or compression stroke of the shock absorber. The main valve seat member 5 is adapted to define a main flow-through opening 50 leading into a damping fluid flow space between the main valve seat member 5 and the main valve member 6. The main valve seat member 51 is adapted to define a first main valve seat portion 51 and a second main valve seat portion 53 radially offset from the first main valve seat portion 51 by means of an annular fluid flow space 52. The main valve member 6 is adapted in shape and size to provide a corresponding first valve member portion 61 and a second valve member portion 63 to interact with the respective first and second main valve seat portions 51, 53. The main valve member 6 may be adapted so when moved into a closed position, the second main valve portion 63 seals with the second main valve seat portion 53. Further, the main valve member 6 may be adapted so when moved into a closed position, the first main valve portion 63 and the first main valve seat portion 53 allows a limited damping fluid flow into the annular fluid flow space 52. By this, damping fluid pressure force may act on the main valve member 6 over a larger pressure area, thereby reducing force required to displace the main valve member away from the main valve seat member 5 so that damping fluid may flow between second valve member portion 63 and second valve seat portion 53.

The main valve member 6 may be adapted to be moved to a closed position with the main valve seat member 5 by means of a spring means 8. The spring means 8 may be a helical spring as illustrated in Fig. 1. The spring means 8 may be arranged to act on the main valve member 6 in a direction towards the main valve seat member 5. As shown in Fig. 1, this direction may be an axial direction. The biasing of the spring means 8 may be adjusted by means of a space element 54 arranged between the main valve seat member 5 and a main valve housing member 4 for housing the main valve member 6. The main valve housing member 4 is adapted with a plurality of ports for enabling damping fluid flow. The main valve housing member 4 is adapted to couple with the main valve seat member 5 to define a main fluid flow space 60 in which the main valve member 6 is arranged to be moveable to regulate a main damping fluid flow F_{M}. The spring means 8 is arranged in said main fluid flow space to push the main valve member 6 towards the valve seat member 5. The main valve member 6 is adapted with an inlet restriction 64 for guiding damping fluid flow into the damping fluid flow space 60. The main valve member 6 is adapted with a shape so that the inlet restriction 64 opens up into a cylinder-shaped space followed by a cone-shaped space.

The valve arrangement 1 comprises a valve seat member 2 providing a valve seat 21 and a flow-through opening 20. The valve arrangement 1 is arranged so that the flow-through opening 20 is fluidly connected with the damping fluid flow space 60 so that a damping fluid flow F_{P} from the damping fluid flow space 60 and at least partially from inlet 64 may flow through the valve arrangement 1 to the second fluid flow space 102 depending on whether the valve arrangement 1 is open or not. This depends in part on the force applied by the force actuator 9, which in Fig. 1 is exemplified as a solenoid with an axially moveable actuator element 91 adapted to apply an actuator force on the valve member 3. The valve member 3 is adapted to interact with the valve seat member 2 to regulate the damping fluid flow F_{P}. As shown in Fig. 1, the valve seat member 2 and the main valve housing member 4 may be formed as one part. Alternatively, they may be formed as separate parts and assembled thereafter. Moreover, the valve member 3 is here exemplified as a shim disc element with a plurality of resiliently moveable portions for interacting with different seat portions of the valve seat member 2.

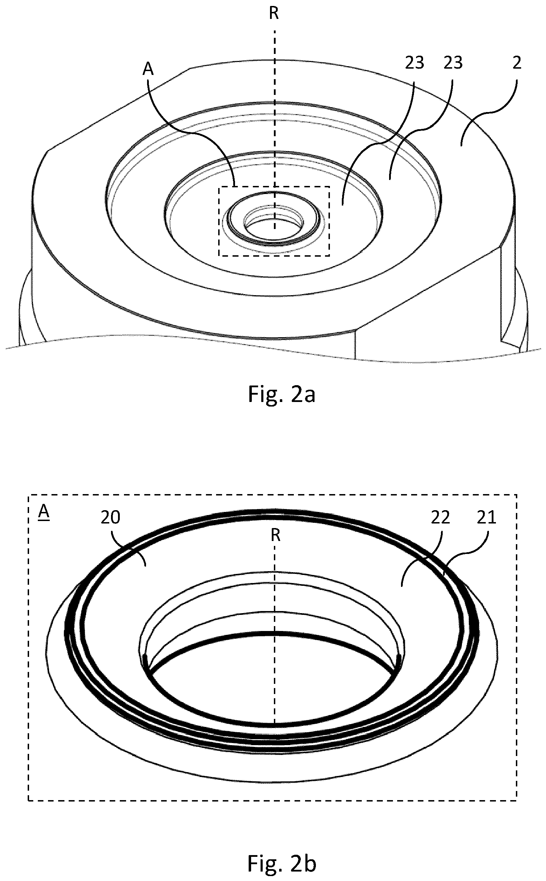

Fig. 2a shows a perspective top view of the valve seat member 2 and Fig. 2b shows a zoomed in perspective top view of the valve seat member 2. The valve seat member 2 is adapted in shape and size to define a flow-through opening 20, a valve seat 21, and a chamfer restriction surface 22, all of which are exemplified with a circular geometry along an axial flow-through opening axis R. The chamfer restriction surface 22 is exemplified with a single continuous chamfer restriction surface extending from an inner flow-through opening channel to the valve seat 21. The chamfer restriction surface 22 also extends in a circumferential direction so as to provide a cone surface. The chamfer restriction surface 22 may be provided by a chamfer provided by the valve seat member 2.

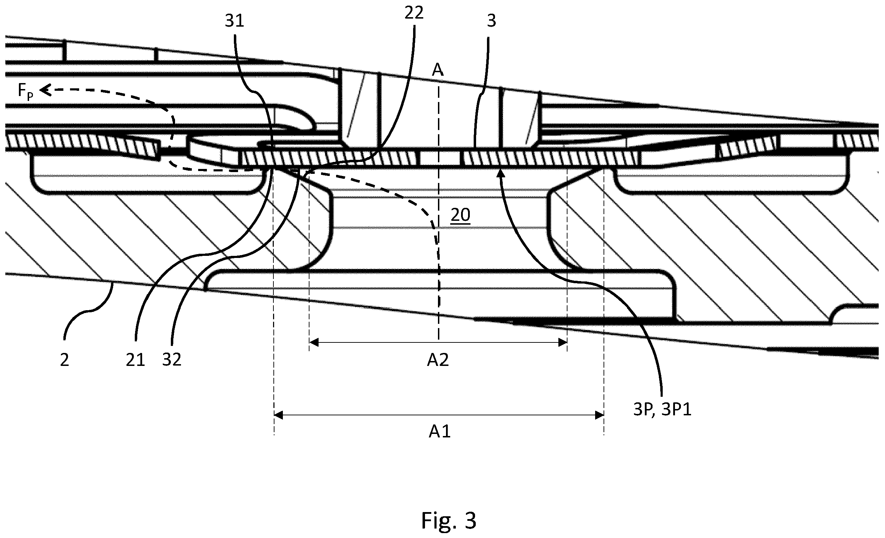

Fig. 3 shows a zoomed in cross-sectional view of the valve arrangement 1 according to one embodiment of the invention. The valve arrangement 1 is adapted to regulate a damping fluid flow F_{P} flowing into the valve arrangement 1 via the flow-through opening 20. The valve arrangement 1 comprises a chamfer restriction 22, 32. The chamfer restriction 22, 32 is provided by a first chamfer restriction surface 22 of the valve seat member 2 and a second chamfer restriction surface 32 of the valve member 3. The first chamfer restriction surface 22 is arranged in the flow-through opening 20 and extends to the valve seat 21. The valve member 3 is arranged to be moved toward the valve seat member 2 by means an actuator force applied by a force actuator so that a valve seat proximate portion 31 of the valve member 3 interacts with the valve seat 21 to restrict and/or provide a regulating function of the damping fluid flow F_{P}. For a first damping fluid flow f1, the damping fluid pressure acts on an inlet side of the valve member 3 over a pressure area 3P which may divide into a first pressure area portion 3P1 and a second pressure area portion 3P2. The first pressure area portion 3P1 may be the area on which the damping fluid pressure acts to provide a damping fluid pressure for overcoming an opening force threshold. The first pressure area portion 3P1 may be the area on which the damping fluid pressure acts at a substantially even pressure level. The opening force threshold may be defined as the force required to move or at least partially displace the valve member 3 away from the valve seat 21. The opening force threshold is adjustable be means of the force actuator.

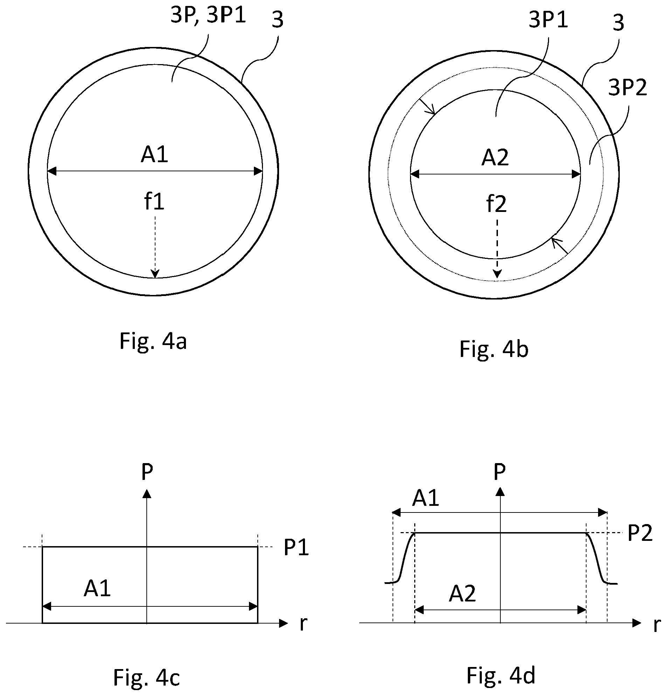

The chamfer restriction 22, 32 of the valve arrangement 1 is adapted so that it improves high frequency performance. In reference to Figs. 3, 4a-d, how this effect is achieved will be explained in the following. For a first damping fluid flow f1, the valve member 3 is initially in a first position, for instance a closed position as shown in Fig. 3. While the valve arrangement 1 remains closed, the damping fluid pressure builds while acting on a pressure area 3P on the inlet side of the valve member 3. When the valve arrangement 3 is closed, the pressure area 3P may substantially correspond to the area exposed to the flow-through opening 20 limited by the valve seat 21. In other words, the pressure area 3P may extend out to a valve seat proximate portion 31. Once the damping fluid pressure builds up to a pressure level so that the resulting damping fluid pressure force can overcome the opening force threshold, the valve member 3 may be at least partially displaced away from the valve seat 21, thereby allowing a limited damping fluid flow f2. When damping fluid flows along the chamfer restriction 22, 32 towards the restriction formed between the valve seat 21 and the valve seat proximate portion 31 and beyond, a pressure drop occurs, which pressure drop is dependent on the chamfer restriction angle and the damping fluid flow. Moreover, once a pressure drop occurs, the pressure area on the inlet side of the valve member 3 decreases from a first pressure area portion 3P1 having a first area size A1 to the first pressure area portion 3P1 having a second area size A2. The pressure level associated with the first pressure area portion 3P1 may be substantially even across the area portion but may consequently increase in associated pressure level in order to maintain the damping flow pressure force required to overcome or match the opening force threshold. The pressure drop may be associated with a second pressure portion 3P2 which may increase in area size for increasing damping fluid flows. The first pressure area portion 3P1 and the second pressure area portion 3P2 may be concentrically arranged and non-overlapping. This effect is illustrated in Figs. 4a-b, which illustrate the inlet side of the valve member 3 (with any openings or apertures omitted) and the size of the pressure area 3P, the first pressure area 3P1 and the second pressure area 3P2 for different damping fluid flows f1, f2, with the second damping fluid flow f2 being greater than the first damping fluid flow f1, and in Figs. 4c-d, which illustrate a pressure profile in terms of radial distance r, for the respective pressure areas of Figs. 4a-b. The second pressure area portion 3P2, which is associated with a pressure gradient, increases in area size for increasing damping fluid flows.

Thus, it can be understood that the chamfer restriction 22 provides a pressure drop along the chamfer restriction in a direction towards the valve seat 21. In one embodiment, the non-zero chamfer restriction angle is equal to or less than 45 degrees. The pressure drop results in the valve seat proximate member 31 of the valve member 3 being subjected to a reduced pressure level which results in improved stability. The chamfer restriction angle impacts the stability of a valve device 100 comprising the valve arrangement 1. Depending on configuration, the positive impact of stability may be negligible for a chamfer restriction angle much greater than 45 degrees. That may however be difficult to enable due to compactness of a valve device and/or shock absorber. Hence, the chamfer restriction angle may be selected from the interval of 5°-45°, preferably from the interval of 5°-30°, and most preferably from the interval of 10°-30°.

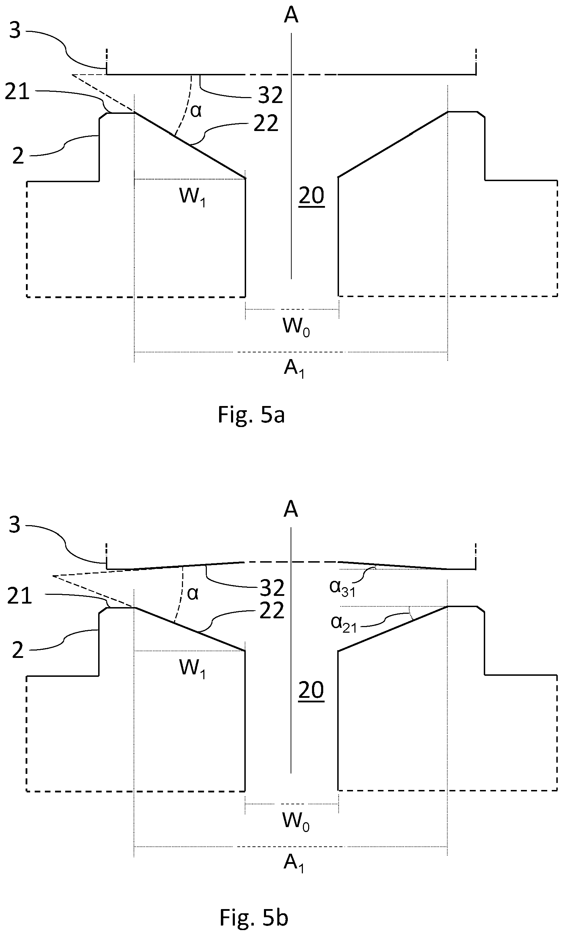

Figs. 5a-b show different embodiments of the valve arrangement 1 with different configurations of the chamfer restriction 22, 32. In Fig. 5a, the chamfer restriction is provided by a first chamfer restriction surface 22 of the valve seat member 2 and a second chamfer restriction surface 32 of the valve seat member 3. The valve member 3 is moveable relative the valve seat member 2 along a displacement axis A. The second chamfer restriction surface 22 extends from an inner lateral position to an outer lateral position relative the displacement axis A. The chamfer restriction 22, 32 is adapted with a chamfer restriction angle α measured as the angle between the first chamfer restriction surface 22 and the second chamfer restriction surface 32. As indicated in Fig. 5a, the second chamfer restriction surface 32, i.e., the chamfer restriction surface provided by the valve member 3, is substantially parallel with a plane perpendicular to the displacement axis A. In such a case, the chamfer restriction angle α may be substantially measured as the angle between the first chamfer restriction surface 22 and a plane perpendicular to the displacement axis A. The angle may in such a case be referenced as a chamfer angle. In Fig. 5a, the chamfer restriction is exemplified with a chamfer restriction angle α of substantially 30.5 degrees.

In Fig. 5b, the first chamfer restriction surface 22, i.e., the chamfer restriction surface of the valve seat member 2, is provided at a first angle α₂₁ relative a plane perpendicular to the displacement axis A. The second chamfer restriction surface 32, i.e., the chamfer restriction surface of the valve member 3, is provided at a second angle α₃₁ relative a plane perpendicular to the displacement axis A. In Fig. 5b, the first angle is substantially 21 degrees and the second angle is substantially 5 degrees. The chamfer restriction angle α is in this particular orientation the sum of the respective angles α₂₁, α₃₁, or substantially 26 degrees. The chamfer restriction surface 32 of the valve member 3 may be adapted in size and shape as previously discussed in relation to the chamfer restriction surface 22 of the valve seat member 2. The valve arrangement 1 may be adapted so that the first chamfer restriction surface 22 and/or the second chamfer restriction surface 32 are provided at a non-zero angle relative a plane perpendicular to the displacement axis A, regardless of the intended application of the valve arrangement 1, whether as a pilot valve arrangement, a main valve arrangement, or a piston valve arrangement, etc.

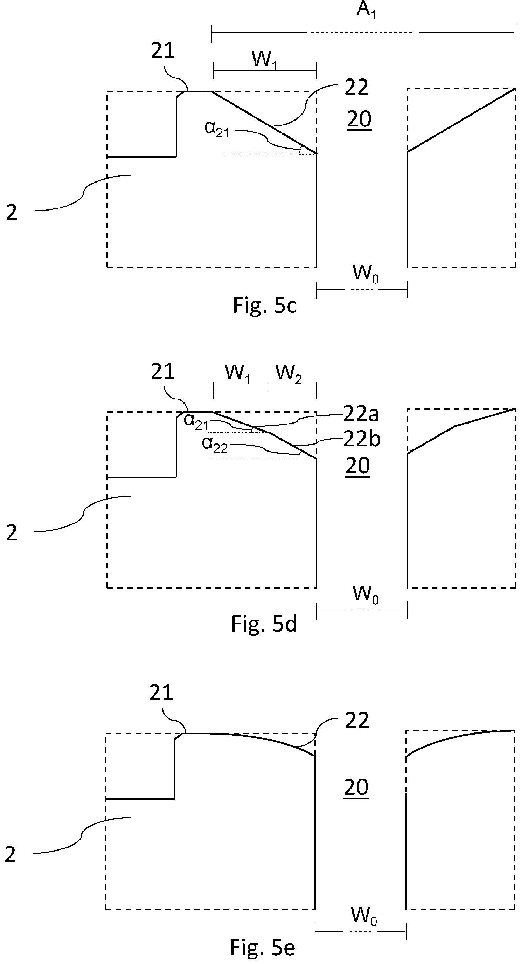

Figs. 5c-e show different embodiments of the valve arrangement 1 with different configurations of the chamfer restriction (wherein the valve member is omitted from view). Fig. 5c shows an embodiment 1 wherein the chamfer restriction is at least partially provided by a first chamfer restriction surface 22 defined by the chamfer angle α₂₁ and the chamfer width W₁. The chamfer angle is measured as the angle between the first chamfer restriction surface 22 and a plane perpendicular to the displacement axis A. The chamfer restriction surface 22 extends from a damping fluid channel of width W₀ within the flow-through opening 20. The flow-through opening 20 may start axially by the valve seat 21. The chamfer restriction surface 22 extends to the valve seat 21. Fig. 5d shows an embodiment of the valve arrangement 1 wherein the chamfer restriction is at least partly provided by a chamfer comprising two different chamfer portions, a first chamfer portion 22a and a second chamfer portion 22b. The first chamfer portion 22a is defined by the chamfer angle α₂₁ and the chamfer width W₁. The second chamfer portion 22b is defined by the chamfer angle α₂₂ and the chamfer width W₂. Fig. 5e shows an embodiment 1 wherein the chamfer restriction is at least partly provided by a chamfer 22 defined by a varying chamfer angle and represents a curved chamfer surface. Depending on the pressure profile drop desired, the chamfer may be adapted in a corresponding manner to achieve it. The different configurations of the chamfer restriction surface 22 of the valve seat member 2 may be applied to the chamfer restriction surface 32 of the valve member 3 e.g., shown in Figs. 5a-b.

Figs. 6a-b show a cross-sectional side view of a valve device 100 wherein the valve arrangement 1 is adapted as a main valve 1' in addition to a pilot valve arrangement 1. Although Figs. 6a-b show both main valve arrangement 1' and pilot valve arrangement 1 with a chamfer restriction as previously discussed, the main valve arrangement 1' may be implemented in a valve device 100 without the pilot valve arrangement 1 adapted with a chamfer restriction 22, 32. The valve arrangement 1' comprises a main valve seat member 5 adapted in size and shape to define a valve seat 53 and a flow-through opening 50. The valve arrangement 1' further comprises a main valve member 6 adapted to be displaceable relative the main valve seat 53 during use in response to a damping fluid pressure force overcoming an opening force threshold, wherein said damping fluid pressure force is provided by damping fluid pressure acting on an inlet side of the main valve member 6, said opening force threshold being at least partly adjustable by means of a force actuator 9 (the force actuator 9 adjusts the pilot valve arrangement 1 which in turn impacts a pilot pressure). The main valve seat member 5 is adapted with a chamfer restriction 511, 65 provided by a first chamfer restriction surface 511 of the main valve seat member 5 and a second chamfer restriction surface 65 of the main valve member 6. The first chamfer restriction surface 511 is exemplified in Fig. 6a as being located in the flow-through opening 50 and extending to the valve seat 53. Said chamfer restriction 511, 65 is adapted with a non-zero chamfer restriction angle equal to or less than 45°. The chamfer restriction 511, 65 of the main valve arrangement 1' may be adapted in a similar manner as described in conjunction with the valve arrangement 1 discussed in Figs. 5a-e.

Figs. 7a-b show different embodiments of a shock absorber 1000A, 1000B according to the invention. Fig. 7a shows a shock absorber 1000A to which a valve device 100 comprising the valve arrangement 1, 1' of the invention is arranged. The valve device 100 may be arranged to regulate damping fluid flow during a compression stroke, a rebound stroke, or both at least partially. Fig. 7b shows a shock absorber 1000A to which two valve devices 100 each comprising a valve arrangement 1 of the invention are arranged. One of the valve devices 100 may be configured for regulating a damping fluid flow during a compression stroke while the other of the valve devices 100 may be configured for regulating a damping fluid flow during a rebound stroke. The valve arrangement 1 according to the invention may alternatively or in combination be incorporated in the shock absorber directly, for instance in a piston valve arrangement. By incorporating the valve arrangement 1, 1' of the invention in a shock absorber 1000A, 1000B, the shock absorber may be adapted for improved high frequency performance.

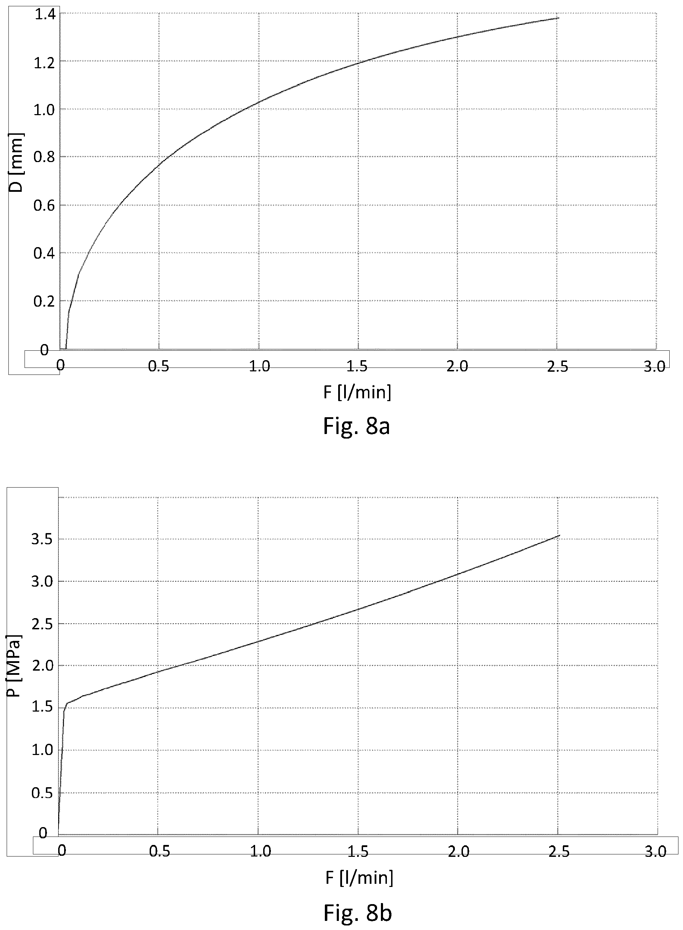

Fig. 8a shows the behavior of the valve member in terms of displacement from the valve seat with respect to damping fluid flow in one example embodiment of the valve arrangement when implemented in a shock absorber as a pilot valve arrangement. As is illustrated, the valve member displaces relatively much more from the valve seat when the flow F goes from zero flow to a flow of 0.5 l/min than when the flow F goes from 1.5 l/min to 2.5 l/min. This behavior is a consequence of the pressure drop along the chamfer restriction, and results in improved stability, since the valve member is more reluctant to move further away from the valve seat for successively increasing damping fluid flows.

Fig. 8b shows the behavior of the valve member in terms of damping fluid pressure within the valve arrangement with respect to damping fluid flow in one example embodiment of the valve arrangement when implemented in a shock absorber as a pilot valve arrangement. As illustrated, the pressure builds quickly for an initial increase in damping fluid flow, until when the valve arrangement is forced to open, and the valve member is displaced away from the valve seat. When the valve arrangement is open, the pressure increases at a much lower rate for successively increasing damping fluid flows.

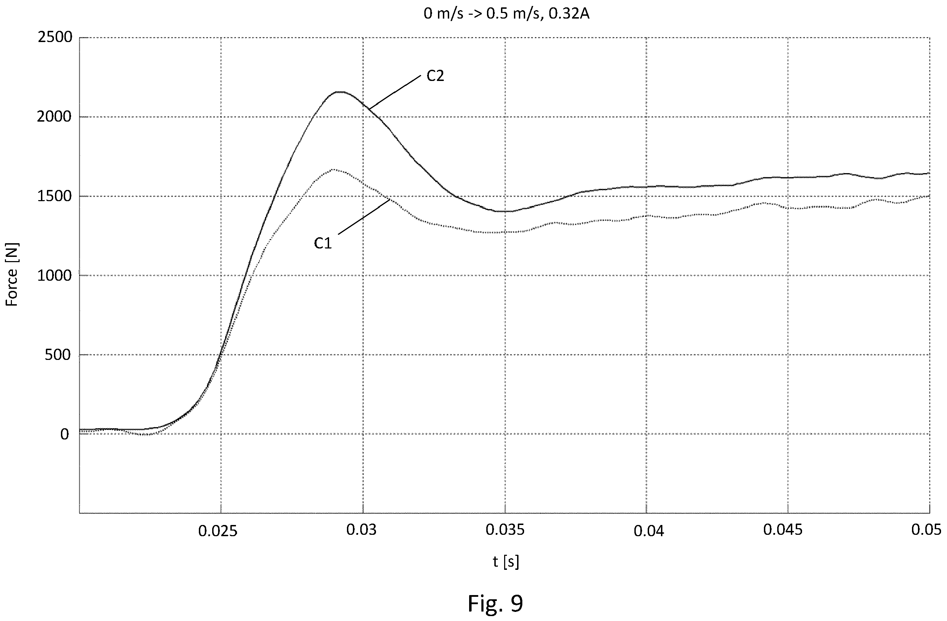

Fig. 9 shows impulse responses of two different embodiments of a valve device comprising a valve arrangement 1 for a stroke speed from 0 m/s to 5 m/s with an acceleration of 100 m/s² and a constant force applied by a solenoid. This simulation substantially corresponds to a vehicle driving on a smooth road and encountering a road elevation following e.g., frost heaving. The curve c1 is an impulse response of a valve device comprising a valve arrangement adapted with a chamfer restriction. The curve c2 is an impulse response of the same valve device wherein the valve arrangement is adapted with a fixed restriction without a chamfer restriction. As can be seen in Fig. 9, the impulse curve c1 tops locally at around 1650 N just before 0.03 seconds after which the force gradually increases over time. Meanwhile, the impulse curve c2 tops locally at around 2200 N just before 0.03 seconds after which the force gradually increases over time. As can be seen, a valve arrangement adapted with a chamfer restriction design as described herein will advantageously reduce a force overshoot following a damping fluid displacement. The force overshoot is proportional to the pressure overshoot occurring, so the chamfer restriction may indeed reduce the pressure overshoot. This is advantageous for enabling a faster responding valve arrangement which helps with improving high frequency performance.

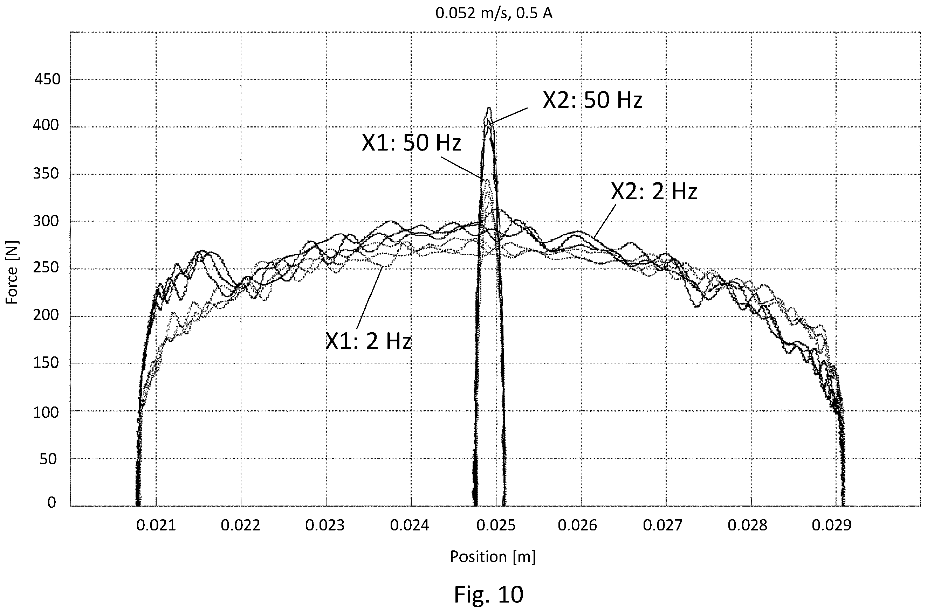

Fig. 10 shows force oscillations at 2 Hz and 50 Hz in terms of stroke position for a valve device incorporating a valve arrangement adapted with a fixed restriction without a chamfer restriction, denoted as X2 (solid lines), and for a valve device incorporating a valve arrangement adapted with a chamfer restriction, denoted as X1 (dashed lines). The plurality of solid and dashed lines around 2 Hz and 50 Hz indicates multiple measurements. In assessing performance at different frequencies, one aspect being assessed is how well the damping force remains substantially at an even level for different frequencies. As shown in Fig. 10, the valve device X1 incorporating a valve arrangement adapted with a chamfer restriction is able to provide a smaller force magnitude difference between 2 Hz and 50 Hz than the valve device X2 incorporating a valve arrangement adapted with a fixed restriction without a chamfer restriction. It can thus be concluded that a valve arrangement incorporating a chamfer restriction improves high frequency performance.

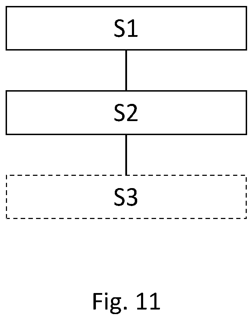

Fig. 11 shows a flow chart of a method for adjusting a damping fluid flow in a valve arrangement. The method comprises the step of providing S1 a valve arrangement comprising: a valve seat member 2 adapted in size and shape to define a valve seat 21 and a flow-through opening 20; a valve member 3 adapted to be displaceable relative the valve seat 21 along a displacement axis A in response to a damping fluid pressure force overcoming an opening force threshold, wherein said damping fluid pressure force is provided by damping fluid flow pressure acting on an inlet side of the valve member 2, and said opening force threshold being at least partly adjustable by means of a force actuator 9, wherein the valve member 3 and the valve seat member 2 provide a chamfer restriction 22, 32 extending to the valve seat 21, the chamfer restriction 22, 32 provided with an opening cross-section which decreases from an inner lateral position to an outer lateral position relative the displacement axis A. The method further comprises a step of adjusting S2 the valve member 3 such that, for a first damping fluid flow f1, the damping fluid pressure force displacing the valve member 3 from the valve seat 21 acts on a first pressure area portion 3P1 on the inlet side of the valve member 3, and for a second damping fluid flow f2 greater than the first damping fluid flow f1, the first pressure area portion 3P1 decreases from a first area size A1 to a smaller second area A2.

The method may further comprise a step of returning the valve member 3 to a starting position during fail safe operation wherein the actuating force from the force actuator fails to be applied with the intended magnitude. This may for instance involve the actuating force vanishing completely or that the actuating force is applied with a too low magnitude following power failure. The starting position may be an equilibrium position. It may be an open position allowing a limited damping fluid flow. It may be a closed position.

The valve arrangement 1 by which the method adjusts a damping fluid flow may be further adapted with any features of the valve arrangement 1 according to the first aspect or any embodiments thereof. The method may comprise one or more additional steps corresponding to operative steps described in association with the valve arrangement 1 in order to control the damping fluid flow.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A valve arrangement (1) for regulating damping fluid flow of a shock absorber (1000A, 1000B), comprising
- a valve seat member (2) adapted in size and shape to define a valve seat (21) and a flow-through opening (20);
- a valve member (3) adapted to be displaceable relative the valve seat (21) along a displacement axis (A) during use in response to a damping fluid pressure force overcoming an opening force threshold, wherein said damping fluid pressure force is provided by damping fluid pressure acting on an inlet side of the valve member (3), said opening force threshold being at least partly adjustable by means of a force actuator (9),
wherein
- the valve member (3) and the valve seat member (2) are adapted to provide a chamfer restriction (22, 32) extending to the valve seat (21), the chamfer restriction (22, 32) provided with an opening cross-section which decreases from an inner lateral position to an outer lateral position relative the displacement axis (A),
- a non-zero chamfer restriction angle (α) between a first chamfer restriction surface (22) provided by the valve seat member (2) and a second chamfer restriction surface (32) provided by the valve member (3) in a lateral direction is equal to or less than 45°.

2. The valve arrangement (1) according to claim 1, wherein the chamfer restriction (22, 32) is adapted so that
a. for a first damping fluid flow (f1), the damping fluid pressure force displacing the valve member (3) from the valve seat (21) acts on a first pressure area portion (3P1) on the inlet side of the valve member (3), and
b. for a second damping fluid flow (f2) greater than the first damping fluid flow (f1), the first pressure area portion (3P1) decreases from a first area size (A1) to a smaller second area size (A2).

3. The valve arrangement (1) according to claim 2, wherein the chamfer restriction (22, 32) is adapted so that the transition of the first pressure area portion (3P1) between the first area size (A1) and the second area size (A2) is stepless.

4. The valve arrangement (1) according to any of claims 1-3, wherein the non-zero chamfer restriction angle (α) is selected from the interval of 5°-45°, preferably from the interval of 5°-30°, and most preferably from the interval of 10°-30°.

5. The valve arrangement (1) according to any of claims 1-4, wherein the chamfer restriction (22, 32) comprises a first and a second chamfer restriction portion (22a, 22b) adapted with respective non-zero chamfer restriction angles (α, β) equal to or less than 45° or selected from the interval of 5°-45°, preferably from the interval of 5°-30°, and most preferably from the interval of 10°-30°.

6. The valve arrangement (1) according to any of claims 1-5, wherein the chamfer restriction (22, 32) is adapted with a curved geometry adapted with a chamfer angle varying intermittently or continuously in a direction from the valve seat (21).

7. The valve arrangement (1) according to any preceding claims, wherein the chamfer restriction (22, 32) extends wholly in a circumferential direction around the flow-through opening (20).

8. The valve arrangement (1) according to any preceding claims, wherein the valve member (3) is a rigid valve member or a shim spring valve member.

9. The valve arrangement (1) according to any preceding claims, comprising a force actuator for adjusting said opening force threshold, wherein the force actuator (9) is a solenoid, a spring actuator, a pressure-controlled actuator, or the like.

10. The valve arrangement (1) according to any preceding claims, comprising a spring element adapted to be arranged between the valve member (3) and the valve seat member (2).

11. The valve arrangement (1) according to any preceding claims, adapted for arrangement in a pilot valve arrangement.

12. The valve arrangement (1) according to any of claims 1-10, adapted for arrangement in a main stage valve arrangement.

13. The valve arrangement (1) according to any claims 1-10, adapted for arrangement in a piston valve arrangement.

14. A shock absorber comprising a valve arrangement (1) according to any preceding claims.

15. Method for adjusting a damping fluid flow in a valve arrangement (1), comprising the steps of:
i. providing (S1) a valve arrangement (1) comprising:
- a valve seat member (2) adapted in size and shape to define a valve seat (21) and a flow-through opening (20);
- a valve member (3) adapted to be displaceable relative the valve seat (21) along a displacement axis (A) in response to a damping fluid pressure force overcoming an opening force threshold, wherein said opening force is provided by damping fluid flow pressure acting on an inlet side of the valve member (2), and said opening force threshold being at least partly adjustable by means of a force actuator (9),
- wherein the valve member (3) and the valve seat member (2) provide a chamfer restriction (22, 32) extending to the valve seat (21), the chamfer restriction (22, 32) provided with an opening cross-section which decreases from an inner lateral position to an outer lateral position relative the displacement axis (A),,
ii. adjusting (S2) the valve member (3) such that
- for a first damping fluid flow (f1), the damping fluid pressure force displacing the valve member (3) from the valve seat (21) acts on a first pressure area portion (3P1) on the inlet side of the valve member (3), and
- for a second damping fluid flow (f2) greater than the first damping fluid flow (f1), the first pressure area portion (3P1) decreases from a first area size (A1) to a smaller second area size (A2).
